# EUROPÄISCHE PATENTANMELDUNG

(11) **EP 3 471 012 A1**
(43) Veröffentlichungstag der Anmeldung: **17.04.2019**
(21) Anmeldenummer: 17196658.3
(22) Anmeldetag: 16.10.2017
(51) Int. Cl.: G06K 7/00, G06K 19/077, G06Q 10/08

(54) **FAHRZEUG, SYSTEM ZUM VERFOLGEN VON STÜCKGUT UND VERFAHREN ZUM VERFOLGEN VON STÜCKGUT**

(71) Anmelder: Lions Track GmbH, 51429 Bergisch Gladbach (DE)
(72) Erfinder: LABUDDA, Frank, 51515 Kürten (DE); FRIEDERICHS, Ingo, 51789 Lindlar (DE)
(74) Vertreter: Richly & Ritschel Patentanwälte PartG mbB

(57) **Zusammenfassung**

Fahrzeug,
- mit wenigstens einer Ladefläche (4),
- mit wenigstens einer Detektionsvorrichtung (6),
- wobei die Detektionsvorrichtung (6) wenigstens eine Antenne (8, 9), eine Steuerungs- und Datenverarbeitungsvorrichtung (10) und eine Sendevorrichtung (12) aufweist,
- wobei die Detektionsvorrichtung (6) zur Erfassung von auf der Ladefläche des Fahrzeugs angeordnetem Stückgut (14) eingerichtet ist,
- wobei die Antenne (8, 9) zum Empfang eines von dem Stückgut (14) gesendeten und/oder reflektierten Signals eingerichtet ist,
- wobei die Steuerungs- und Datenverarbeitungsvorrichtung (10) zur Erzeugung von Stückgutdaten aus einem von der Antenne (8, 9) empfangenen Signal eingerichtet ist, und
- wobei die Sendevorrichtung (12) zur Übermittlung der Stückgutdaten an einen Empfänger (18) eingerichtet ist.

## Beschreibung

Die Erfindung betrifft ein Fahrzeug, einen Container, ein System zum Verfolgen von Stückgut und ein Verfahren zum Verfolgen von Stückgut.

Unternehmen, die mobile Betriebsmittel, wie Werkzeuge, Maschinen, Beschilderungen, Gerüste oder dergleichen für die Durchführung eigener Gewerke einsetzen oder diese Betriebsmittel auf Leihbasis zur Verfügung stellen, benötigen eine Materialverwaltung, um den Lagerbestand und die derzeit eingesetzten mobilen Betriebsmittel zu überwachen.

Insbesondere Betriebe, die Beschilderungen, Ampelanlagen und Begrenzungsmaterial zur Verkehrssicherung von Straßenbaustellen oder dergleichen zur Verfügung stellen, verzeichnen jährlich hohe Einbußen durch den Verlust von Material aufgrund von Diebstahl, Vandalismus oder Fehlern in der Dokumentation.

So kann es auf einem Betriebsgelände bei rein manueller Erfassung und Dokumentation von aus einem Lager entnommenem Stückgut zu Abweichungen zwischen der Art und Anzahl der tatsächlich entnommenen Einheiten und deren schriftlicher Dokumentation in der Materialverwaltung kommen.

Weiter ist nicht lückenlos nachvollziehbar, welches Material das Betriebsgelände tatsächlich auf einem Fahrzeug verlässt und an welchem Ort das Material abgeladen worden ist. Sollen beispielsweise mehrere Lieferstellen nacheinander abgefahren und mit Material beliefert werden, ist das Unternehmen auf eine präzise manuelle Dokumentation durch den Fahrer angewiesen, welche Materialien an den jeweiligen Lieferstellen abgeladen worden sind. Da das Beladen und Ausliefern häufig unter hohem Zeitdruck stattfindet, sind Fehler bei der manuellen Dokumentation vorprogrammiert. Zudem sind die Unternehmen auf das Engagement und den Willen der Mitarbeiter angewiesen, eine fehlerfreie und lückenlose Dokumentation vorzunehmen.

Vor diesem Hintergrund liegt der Erfindung die technische Problemstellung zugrunde, ein Fahrzeug, einen Container, sowie ein System und ein Verfahren zum Verfolgen von Stückgut anzugeben, welche die voranstehend beschriebenen Nachteile nicht oder zumindest in geringerem Maße aufweisen, und insbesondere eine automatisierte Verfolgung von Stückgut ermöglichen.

Die voranstehend beschriebene, technische Problemstellung wird gelöst durch ein Fahrzeug nach Anspruch 1, einen Container nach Anspruch 9 durch ein System nach Anspruch 10 sowie durch ein Verfahren nach Anspruch 14. Weitere Ausgestaltungen der Erfindung ergeben sich aus den abhängigen Ansprüchen und der nachstehenden Beschreibung.

Gemäß einem ersten Aspekt betrifft die Erfindung ein Fahrzeug, mit wenigstens einer Detektionsvorrichtung, wobei die Detektionsvorrichtung wenigstens eine Antenne, eine Steuerungs- und Datenverarbeitungsvorrichtung und eine Schnittstelle, wie eine Sendevorrichtung oder dergleichen, aufweist, wobei die Detektionsvorrichtung zur Erfassung von auf der Ladefläche des Fahrzeugs angeordnetem Stückgut eingerichtet ist, wobei die Antenne zum Empfang eines von dem Stückgut gesendeten und/oder reflektierten Signals eingerichtet ist, wobei die Steuerungs- und Datenverarbeitungsvorrichtung zur Erzeugung von Stückgutdaten aus einem von der Antenne empfangenen Signal eingerichtet ist, und wobei die Schnittstelle zur Übermittlung der Stückgutdaten an einen Empfänger eingerichtet ist. Das Fahrzeug selbst dient demnach als Messpunkt, um auf der Ladefläche aufgenommenes Stückgut zu erfassen. Auf diese Weise kann durch eine Messung des Fahrzeugs selbst festgestellt werden, welches Stückgut tatsächlich von einer Lagerstelle durch das Fahrzeug entfernt worden ist und welches Material bzw. Stückgut an einer Lieferstelle abgeladen worden ist.

Das Stückgut kann auf einer Ladefläche des Fahrzeugs und/oder in einem Laderaum des Fahrzeugs bevorratet sein.

Wenn vorliegend von Stückgut gesprochen wird, so handelt es sich dabei um einzeln bzw. separat transportierbare Einheiten oder Bauteile, wie zum Beispiel mobile Betriebsmittel, wie Werkzeuge, Maschinen, Beschilderungen, Gerüstbauteile oder dergleichen. Beispielsweise kann es sich bei dem Stückgut um Baken zur Baustellensicherung, mobile Lichtsignalanlagen oder Beschilderungen zur Ausstattung von Straßenbaustellen und dergleichen handeln.

Bei dem Stückgut kann es sich um Werkstücke für die industrielle Einzel-, Klein- oder Großserienfertigung handeln. Bei dem Stückgut kann es sich um Postpakete oder Versandartikel handeln. Bei dem Stückgut kann es sich um Nutztiere handeln.

Bei dem Fahrzeug kann es sich demnach um ein straßengebundenes Fahrzeug handeln.

Bei dem Fahrzeug kann es sich um ein Nutzfahrzeug handeln. Bei dem Fahrzeug kann es sich um einen Lastkraftwagen handeln. Insbesondere kann es sich beispielsweise um einen Kleinlaster, um einen Sattelzug aus Zugmaschine und Auflieger, oder um ein Gespann aus einem Lastkraftwagen mit einem Anhänger handeln.

Alternativ kann es sich bei dem Fahrzeug um ein schienengebundenes Fahrzeug handeln.

Soweit ein Gespann bzw. Lastzug aus Zugmaschine und Anhänger vorgesehen ist, kann sowohl die Zugmaschine als auch der Anhänger mit einer separaten Detektionsvorrichtung ausgestattet sein. Alternativ können der Anhänger und die Zugmaschine separate Antennen aufweisen, die eine gemeinsame oder separate Steuerungs- und Datenverarbeitungsvorrichtung und eine gemeinsame oder separate Sendevorrichtung nutzen.

Die Sendevorrichtung kann ein Mobilfunkmodul zum Herstellen einer Internetverbindung aufweisen oder mit einem Mobilfunkmodul drahtlos oder kabelgebunden verbunden sein. Es kann vorgesehen sein, dass die Sendevorrichtung eine fest im Fahrzeug verbautes Moduls ist. Alternativ oder ergänzend kann vorgesehen sein, dass ein Smartphone als Sendevorrichtung dient, wobei das Smartphone kabelgebunden und/oder drahtlos, z.B. per Bluetooth und/oder W-Lan, mit der Steuerungs- und Datenverarbeitungsvorrichtung verbunden sein kann.

Die Stückgutdaten können auf diese Weise über das Mobilfunknetz an einen Server mit einer Datenbank übermittelt werden, um die Stückgutdaten zu erfassen und zu speichern. Bei einem Empfänger kann es sich daher beispielsweise um einen Server mit einer Datenbank handeln. Es kann vorgesehen sein, dass als Empfänger alternativ oder ergänzend ein Mobiltelefon bereitgestellt wird, wie ein Smartphone oder dergleichen, auf dem die Stückgutdaten erfasst und/oder angezeigt werden.

Alternativ oder ergänzend zu einer Sendevorrichtung kann die Schnittstelle eine Buchse zur kabelgebundenen Datenübertragung aufweisen, wie eine USB-Schnittstelle, eine Ethernet/LAN-Schnittstelle oder dergleichen. So können auf einer Route gesammelte Stückgutdaten lokal ausgelesen werden.

Nach einer weiteren Ausgestaltung des Fahrzeugs ist vorgesehen, dass die Detektionseinrichtung zwei oder mehr Antennen aufweist, wobei wenigstens zwei der Antennen entlang einer vertikalen Richtung betrachtet einen Abstand zueinander aufweisen. Die Antennen können insbesondere dazu eingerichtet sein, ein Messvolumen von 30 m³ oder mehr, insbesondere 60 m³ oder mehr, abzudecken. Durch den vertikalen Versatz der Antennen kann eine verbesserte Detektion von Stückgut erreicht werden.

Alternativ oder ergänzend kann vorgesehen sein, dass eine oder mehrere Antennen einen vertikalen Abstand zu der Ladefläche aufweisen. Soweit es sich bei dem Fahrzeug um einen Lastkraftwagen handelt, kann beispielsweise eine oder mehrere Antennen an einer Bordwand eines Führerhauses befestigt angeordnet sein, insbesondere auf Höhe der Fahrerkabine. Durch den vertikalen Abstand der Antennen zur Ladefläche kann eine verbesserte Detektion von Stückgut erreicht werden.

Nach einer weiteren Ausgestaltung des Fahrzeugs ist vorgesehen, dass wenigstens eine Antenne an die Ladefläche angrenzend angeordnet ist. Beispielsweise können eine, zwei oder mehr Antennen unmittelbar unterhalb der Ladefläche, d.h. insbesondere in einem Bereich zwischen der Ladefläche einem Fahrgestell des Fahrzeugs, angeordnet sein, so dass das Ladevolumen und die verfügbare Ladefläche durch die Anordnung der Antennen nicht verkleinert wird. Es kann vorgesehen sein, dass die Ladefläche eine oder mehrere Durchgangsöffnungen aufweist, sodass zwischen einer unterhalb der Ladefläche angeordneten Antenne und zu erfassendem Stückgut ein Sichtkontakt ermöglicht werden kann.

Die Ladefläche kann Holz aufweisen oder aus Holz bestehen.

Alternativ oder ergänzend kann wenigstens eine Antenne an einer der Ladeflächen angrenzenden Seitenwand oder Rückwand befestigt sein. Hierbei kann es sich beispielsweise um eine ein Ladevolumen begrenzende Seitenwandung handeln, die im Wesentlichen senkrecht zur Ladefläche orientiert sind.

Es können beispielsweise acht oder mehr Antennen vorgesehen sein, die an ein Ladevolumen des Fahrzeugs angrenzend angeordnet sind und beispielsweise an Eckpunkten des Ladevolumens angeordnet sind.

Nach einer weiteren Ausgestaltung des Fahrzeugs ist vorgesehen, dass wenigstens eine Antenne eine RFID-Antenne ist, insbesondere, dass alle Antennen RFID-Antennen sind. So kann das zu erfassende Stückgut mit RFID-Tags ausgestattet sein, um in kostengünstiger und einfacher Weise eine Erfassung des Stückguts anhand im RFIG-Tag hinterlegter, codierter Stückgutdaten und/oder Stückgutidentifikationsnummer zu ermöglichen.

Die Detektionsvorrichtung kann dazu eingerichtet sein, in einem chaotischen Messverfahren auf der Ladefläche angeordnetes, mit RFID-Tags versehenes Stückgut zu erfassen. Eine RFID-Antenne kann eine Sendeleistung von 0,1 W bis 5 W, insbesondere 2 W, aufweisen. Eine RFID-Antenne kann dazu eingerichtet sein, Funksignale in diskreten Zeitabständen von 20 ms bis 200 ms auszusenden.

Dadurch, dass das Fahrzeug selbst als Messpunkt zum Erfassen des geladenen Stückguts dient, können auch vergleichsweise zeitaufwendige Messverfahren eingesetzt werden, die in einem chaotischen Messverfahren durch Aussenden von Einzelsignalen zu diskreten Zeitabständen sukzessive das mit RFID-Tags versehene Stückgut erfassen.

Nach einer weiteren Ausgestaltung des Fahrzeugs ist vorgesehen, dass die Antenne an einer Halterung befestigt ist, die ein Gelenk und/oder eine Führung zum Einstellen der Orientierung und/oder der Position der Antenne hat. Beispielsweise kann die Halterung ein Kugelgelenk oder ein Scharnier aufweisen, das nach dem Einstellen der vorgesehenen Winkellage feststellbar ist. Alternativ oder ergänzend kann eine Linearführung vorgesehen sein, um eine Position der Antenne einzustellen. So kann die Position und Orientierung der Antenne, falls erforderlich, an das jeweils zu erfassende Messvolumen eines Fahrzeugs und/oder die Dimensionen des zu erfassenden Stückguts angepasst werden.

Alternativ oder ergänzend kann vorgesehen sein, dass wenigstens eine Antenne in einem staub- und/oder wasserdichten Gehäuse aufgenommen ist, insbesondere, dass alle Antennen in einem staub- und/oder wasserdichten Gehäuse aufgenommen sind. Insbesondere kann das Gehäuse die Anforderungen der Schutzklasse IP65 nach DIN EN 60529 erfüllen.

Insbesondere kann auch ein an der Antenne vorgesehener Antennenanschluss innerhalb eines solchen staub- und/oder wasserdichten Gehäuses aufgenommen sein. Damit kann die Antenne vor Witterungseinflüssen und vor mechanischer Beschädigung beim Be- und Entladen des Fahrzeugs geschützt werden.

Die Antenne kann mithilfe von Dämpfungselementen an das Fahrzeug gekoppelt sein, um die Antenne zumindest teilweise von Fahrzeugvibrationen zu entkoppeln. So kann die mechanische Belastung der Antenne durch fahrdynamische oder motorbedingte Vibrationen reduziert werden.

Um eine zuverlässige Befestigung der Antenne zu erreichen, kann die Antenne mehrfach, beispielsweise vierfach, mit einem Gehäuse oder mit einem Befestigungselement des Fahrzeugs verbunden sein.

Es kann vorgesehen sein, dass die Antenne einen Abstrahlwinkel von weniger als 90° aufweist, insbesondere dass der Abstrahlwinkel kleiner oder gleich 65° ist, insbesondere 65° beträgt. Wenn vorliegend von einem Abstrahlwinkel gesprochen wird, so handelt es sich hierbei um den zirkularen Abstrahlwinkel eines Abstrahlkegels. Insbesondere kann es sich bei der Antenne um eine Flachantenne, wie eine RFID-Antenne oder dergleichen, handeln, die dazu eingerichtet ist, aktiv Funksignale auszusenden.

Alternativ oder ergänzend kann vorgesehen sein, dass die Antenne eine Detektionsfläche hat, die unter einem Winkel von 90° oder weniger zu einer horizontalen Planebene geneigt ist. Je nachdem, ob die Antenne beispielsweise unterhalb einer Ladefläche oder oberhalb der Ladefläche unter einem vertikalen Abstand dazu angeordnet ist, kann der mit der Planebene eingeschlossen Winkel 30°, 60° oder weniger betragen, insbesondere genau 30° oder genau 60° betragen.

Um derartige Winkeleinstellungen zu erreichen, kann für eine Antenne eine Halterung vorgesehen sein, die unter einem spitzen Winkel von 30° keilförmig zuläuft. Bei einer solchen Halterung kann es sich demnach um eine Halterung mit fest voreingestelltem Befestigungswinkel handeln. Alternativ oder ergänzend können die voranstehend beschriebenen Gelenke verwendet werden, um eine individuelle Einstellung der Orientierung einer Detektionsfläche der Antenne zu ermöglichen.

Es kann vorgesehen sein, dass der Antenne und/oder der Steuerungs- und Datenverarbeitungsvorrichtung ein Akku zur Energieversorgung der Antenne zugeordnet ist. Sofern es sich beispielsweise um eine RFID-Antenne handelt, kann diese demnach mithilfe des Akkus autark von einem Bordnetzsystem des Fahrzeugs betrieben werden.

Alternativ oder ergänzend kann vorgesehen sein, dass die Antenne an eine Stromversorgung der Detektionsvorrichtung, wie einen Akku oder dergleichen, mit einem Kabel angeschlossen ist.

Alternativ kann vorgesehen sein, dass die Antenne und/oder die Steuerungs- und Datenverarbeitungseinrichtung und/oder die Sendeeinrichtung über ein Bordnetz des Fahrzeugs mit elektrischer Energie versorgt wird.

Es kann vorgesehen sein, dass die Antenne eine passive Antenne ist.

Es kann vorgesehen sein, dass der Antenne eine magnetische Befestigungseinrichtung zugeordnet ist. So kann die Antenne in einfacher Weise an bestehenden Fahrzeugen nachgerüstet werden, ohne dass eine mechanische Bearbeitung des Fahrzeugs oder etwaige Schweißverbindungen erforderlich wären.

Das Fahrzeug kann ein GPS-Modul aufweisen, das mit der Steuerungs- und Datenverarbeitungsvorrichtung gekoppelt ist, wobei die Steuerungs- und Datenverarbeitungsvorrichtung dazu eingerichtet ist, eine Erfassung des Stückguts zu starten, sobald das Fahrzeug einen vorgegebenen GPS-Koordinatenbereich verlässt und/oder in einen vorgegebenen GPS-Koordinatenbereich eindringt.

Das Fahrzeug kann demnach dazu eingerichtet sein, eine Erfassung des Stückguts in Abhängigkeit der aktuellen Fahrzeugposition zu starten. Alternativ kann vorgesehen sein, dass die Messung, beispielsweise beim Verlassen eines Betriebsgeländes, über eine Benutzerschnittstelle manuell durch einen Fahrer ausgelöst werden kann. Es kann daher eine Benutzerschnittstelle vorgesehen sein, die alternativ oder ergänzend zu dem GPS-Modul die Erfassung des Stückguts durch die Detektionsvorrichtung manuell auslöst.

Es kann vorgesehen sein, dass die Steuerungs- und Datenverarbeitungsvorrichtung auf ein GPS-Modul eines Mobiltelefons, wie eines Smartphones oder dergleichen, zugreift, wobei das Smartphone kabelgebunden und/oder drahtlos, z.B. per Bluetooth und/oder W-Lan, mit der Steuerungs- und Datenverarbeitungsvorrichtung verbunden sein kann. Ein Smartphone kann daher sowohl zum Bereitstellen der GPS-Daten als auch zum Herstellen einer Mobilfunkverbindung dienen. Weiter können erfasste Stückgutdaten live mit einem Server und/oder der Steuerungs- und Datenverarbeitungsvorrichtung abgleichbar und auf einem Smartphone anzeigbar sein.

Gemäß einem zweiten Aspekt betrifft die Erfindung einen Container, insbesondere Frachtcontainer, mit wenigstens einer Detektionsvorrichtung, wobei die Detektionsvorrichtung wenigstens eine Antenne, eine Steuerungs- und Datenverarbeitungsvorrichtung und eine Schnittstelle, wie eine Sendevorrichtung oder dergleichen, aufweist, wobei die Detektionsvorrichtung zur Erfassung von in dem Container angeordnetem Stückgut eingerichtet ist, wobei die Antenne zum Empfang eines von dem Stückgut gesendeten und/oder reflektierten Signals eingerichtet ist, wobei die Steuerungs- und Datenverarbeitungsvorrichtung zur Erzeugung von Stückgutdaten aus einem von der Antenne empfangenen Signal eingerichtet ist, und wobei die Schnittstelle zur Übermittlung der Stückgutdaten an einen Empfänger eingerichtet ist.

Es versteht sich, dass alle voranstehend für das Fahrzeug diskutieren Merkmale und Weiterbildungen der Detektionsvorrichtung gleichermaßen als Merkmale und Weiterbildungen auf den erfindungsgemäßen Container übertragbar sind.

Bei dem Container kann es sich um einen 20- oder 40-Fuß Container handeln. Es versteht sich, dass auch Container kleiner als 20-Fuß oder größer als 40-Fuß erfindungsgemäß ausgestattet sein können.

Der Container kann als mobiles Material- oder Warenlager eingesetzt werden, um den Material- oder Warenbestand zu überwachen.

Der Container kann eine automatisierte Zugangskontrolle, die alle den Container betretenden und verlassenden Personen erfasst, aufweisen.

Gemäß einem dritten Aspekt betrifft die Erfindung ein System zum Verfolgen von Stückgut, mit wenigstens einer Lagerstätte zur Lagerung des Stückguts, mit gelagertem Stückgut, wobei das Stückgut jeweils eine Einrichtung zum Senden und/oder reflektieren von Signalen aufweist, mit einem in voranstehend beschriebener Weise ausgestalteten Fahrzeug und/oder einem in voranstehend beschriebener Weise ausgestalteten Container, und mit einer Datenbank zur Erfassung von Stückgutdaten. Durch das Fahrzeug, das einen Messpunkt zur Detektion von Stückgut bildet, kann der Stückgutlagerbestand des Stückguts und der Stückgutbestand an verschiedenen Lieferstellen in einer einzelnen Datenbank automatisiert gepflegt werden. Dabei kann die Lagerstätte zentral oder dezentral realisiert sein. Das bedeutet, die Lagerstätte kann ein einzelnes, oder mehrere zueinander beabstandete Gebäude aufweisen. Dies gilt gleichermaßen für den alternativ oder ergänzend vorgesehenen Container.

Der Datenbank kann wenigstens eine redundante Datenbank zum Abgleich und zur Sicherung der Stückgutdaten aufweisen.

Das System kann eine Benutzerschnittstelle zum Festlegen eines ersten GPS-Koordinatenbereichs und eines zweiten GPS-Koordinatenbereichs haben, wobei sich die Lagerstätte innerhalb des ersten GPS-Koordinatenbereichs befindet und eine Liefer- und/oder weitere Beladezone innerhalb des zweiten GPS-Koordinatenbereichs angeordnet ist, wobei das Fahrzeug dazu eingerichtet ist, eine Stückguterfassung nach dem Verlassen und/oder beim Erreichen des ersten und/oder des zweiten GPS-Koordinatenbereichs zu starten. Auf diese Weise kann ein automatisiertes System angegeben werden, dass eine vollautomatische Stückgutverwaltung ermöglicht, in dem das Fahrzeug als Messpunkt zur Erfassung der Stückzahlstückgutdaten dient. Es kann vorgesehen sein, dass das Stückgut jeweils ein RFID-Tag aufweist. Es kann vorgesehen sein, dass es sich bei dem Stückgut um Betriebsmittel zum Einrichten von Straßenbaustellen handeln. Wie eingangs bereits erwähnt, kann es sich dabei um mobile Beschilderungen, Baken, Ampelsysteme, Leitplanken oder dergleichen handeln.

Es kann vorgesehen sein, dass das System einen tragbaren Messkoffer aufweist, in dem die Antenne, die Steuerungs- und Datenverarbeitungsvorrichtung und die Sendevorrichtung aufgenommen sind. Mit einem solchen Messkoffer ist eine einfache Nachrüstung des Systems an bestehenden Fahrzeugen möglich, bzw. der punktuelle Einsatz des Systems beispielsweise mit Leihfahrzeugen oder Subunternehmern, wird einfach ermöglicht.

Ein solcher tragbaren Messkoffere kann alternativ oder ergänzend zu mehreren in voranstehend beschriebener Art und Weise ausgestatteten Fahrzeugen mit fest verbauten Antennen, Steuerungs- und Datenverwaltungseinrichtungen und Sendeeinrichtungen in einem System zum Verfolgen von Stückgut eingesetzt werden.

Ein solcher Messkoffer kann mit einem Akku zur Energieversorgung ausgestattet sein und/oder mit einem Bordnetz des Fahrzeugs koppelbar sein.

Gemäß einem vierten Aspekt betrifft die Erfindung ein Verfahren zum Verfolgen von Stückgut, mit den Verfahrensschritten:
- Bereitstellen eines erfindungsgemäßen Systems;
- Beladen des Fahrzeugs und/oder des Containers mit Stückgut;
- Erfassen von Stückgutdaten mit der Detektionseinrichtung, wobei die Antenne ein von dem Stückgut gesendetes und/oder reflektiertes Signal empfängt, wobei die Steuerungs- und Datenverarbeitungsvorrichtung aus dem von der Antenne empfangenen Signal Stückgutdaten erzeugt;
- Übermittlung der Stückgutdaten an einen Empfänger.

Das Verfahren ermöglicht daher das Erfassen von tatsächlich im Umlauf befindlichem Stückgut, da das Fahrzeug und/oder der Container als Messpunkt verwendet wird.

Nach einer weiteren Ausgestaltung des Verfahrens ist vorgesehen, dass das Erfassen von Stückgutdaten nach dem Verlassen oder Erreichen eines ersten und/oder eines zweiten GPS-Koordinatenbereichs automatisiert ausgelöst wird, wobei vor dem Erfassen von Stückgutdaten ein Festlegen eines ersten GPS-Koordinatenbereichs und eines zweiten GPS-Koordinatenbereichs mittels einer Benutzerschnittstelle erfolgt, wobei sich eine Lagerstätte innerhalb des ersten GPS-Koordinatenbereichs befindet und eine Liefer- und/oder Beladezone innerhalb des zweiten GPS-Koordinatenbereich angeordnet ist, und wobei eine aktuelle Fahrzeug- und/oder Containerposition mittels eines GPS-Moduls überwacht wird.

Das Erfassen von Stückgutdaten kann daher insbesondere vollständig automatisiert erfolgen, um die Materialverwaltung von manuellem Arbeitsaufwand und menschlichen Fehlern zu entkoppeln. So ist jederzeit nachvollziehbar, welches Material eine Lagerstätte verlassen hat und welches Material an einer jeweiligen Be- oder Entladestelle zu- oder abgeladen worden ist.

Es kann vorgesehen sein, dass in einem weiteren Verfahrensschritt Stückgutdaten an ein Mobiltelefon, wie ein Smartphone oder dergleichen, versendet werden. Beispielsweise kann auf diese Weise ein Fahrer oder Bediener, der das Beladen eines Fahrzeugs vornimmt, unmittelbar erkennen, ob der Beladungszustand korrekt von dem System erfasst worden ist bzw. ob die Ladung entsprechend dem auszuführenden Auftrag vollständig verladen worden ist.

Es kann beispielsweise vorgesehen sein, dass eine mobile Applikation eines Smartphones sowie lokale Rechner eines Unternehmens mit einem Server mit einer Datenbank gekoppelt sind, um jederzeit online auf die Stückgutdaten zugreifen zu können.

So kann in einem Verfahrensschritt vorgesehen sein, dass die Sendeeinrichtung Stückgutdaten über das Mobilfunknetz an einen Server sendet.

Nachfolgend wird die Erfindung anhand einer Ausführungsbeispiele darstellenden Zeichnung näher beschrieben: es zeigen jeweils schematisch:
- Fig. 1: ein erfindungsgemäßes Fahrzeug;
- Fig. 2: das Fahrzeug aus Fig. 1;
- Fig. 3: eine Ladefläche mit Antennen;
- Fig. 4: eine Antenne mit Halterung;
- Fig. 5: eine weitere Antenne mit Halterung;
- Fig. 6: ein erfindungsgemäßes System;
- Fig. 7: ein erfindungsgemäßes Verfahren;
- Fig. 8: ein erfindungsgemäßes Verfahren;
- Fig. 9: einen erfindungsgemäßen Container.

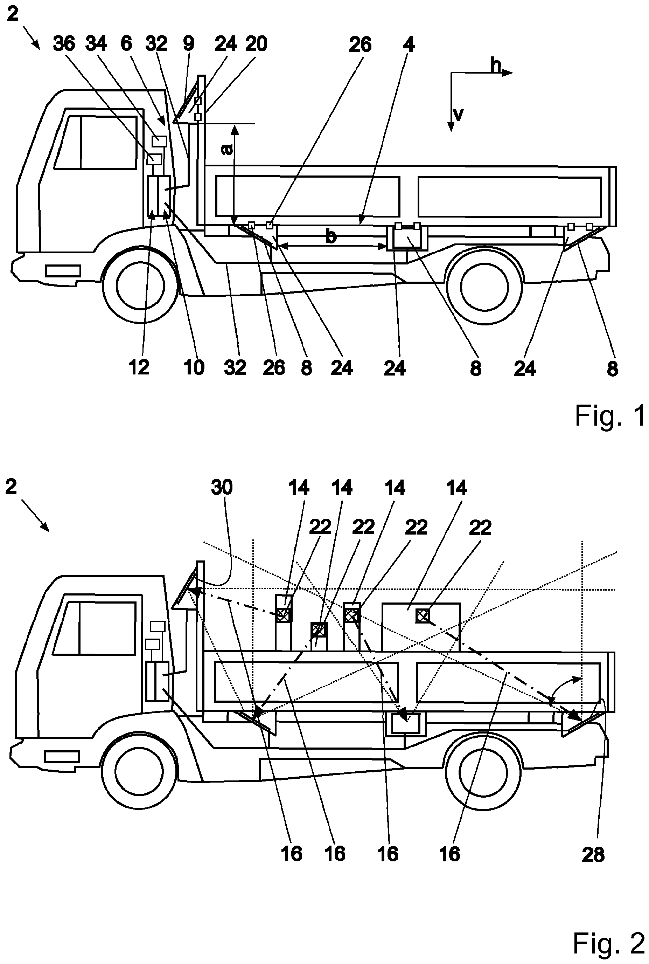

Fig. 1 und 2 zeigen ein Fahrzeug 2 mit einer Ladefläche 4, die vorliegend im Wesentlichen aus Holz gebildet ist. Bei dem Fahrzeug 2 handelt es sich um einen Lastkraftwagen 2. Das Fahrzeug hat wenigstens eine Detektionsvorrichtung 6.

Die Detektionsvorrichtung 6 weist eine Mehrzahl von Antennen 8,9, eine Steuerung-und Datenverarbeitungsvorrichtung 10 und eine Sendevorrichtung 12 auf.

Die Detektionsvorrichtung 6 ist zur Erfassung von auf der Ladefläche 4 des Fahrzeugs 2 angeordnetem Stückgut 14 eingerichtet (Fig. 2).

Die Antennen 8 sind zum Empfang von Signalen 16 eingerichtet, die von einem jeweiligen Stückgut 14 gesendet oder reflektiert werden.

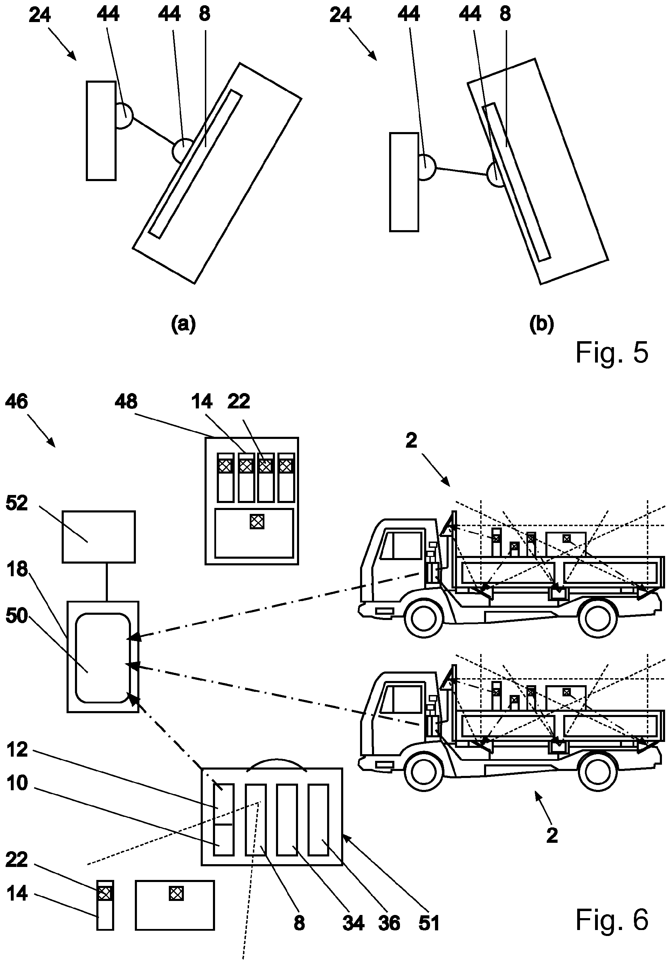

Die Steuerung- und Datenverarbeitungsvorrichtung 10 ist dazu eingerichtet, Stückgutdaten aus den Signalen 16 zu erzeugen. Die Sendevorrichtung 12 ist zur Übermittlung der Stückgutdaten an einen Empfänger 18 eingerichtet (Fig. 6).

Wie Fig. 1 zu entnehmen ist, ist zwischen den Antennen 8 und 9 entlang einer vertikalen Richtung v betrachtet ein Abstand a vorgesehen. Die Antennen 8 weisen entlang einer horizontalen Richtung h einen Abstand b zueinander auf. Die Antennen 9 haben demnach auch einen in vertikaler Richtung v betrachteten Abstand zur Ladefläche 4, der größer a ist.

Die Antennen 8 sind unmittelbar unterhalb der Ladefläche 4 an die Ladefläche 4 angrenzend angeordnet. Die Antenne 9 ist an einer an die Ladefläche 4 angrenzenden Seitenwand 20 angeordnet

Bei den Antennen 8,9 handelt es sich vorliegend um RFID-Antennen 8, 9. Diese sind dazu eingerichtet, mit an dem Stückgut 14 angebrachten RFID-Tags 22 zu kommunizieren, wobei die stückgutspezifisch individualisierten RFID-Tags 22 zur Identifikation des Stückguts dienen, wie in Fig. 2 exemplarisch dargestellt.

Jede Antenne 8, 9, ist jeweils an einer Halterung 24 befestigt. Die Halterung 24 bildet gleichermaßen ein Gehäuse 24 in dem die jeweilige Antenne 8, 9 staub- und wasserdicht aufgenommen ist. Eine jeweilige Halterung 24 ist mit Dämpfungselementen 26 an dem Fahrzeug 2 befestigt, um die jeweilige Antenne 8,9 von Fahrzeugvibrationen zu entkoppeln. Die Dämpfungselemente 26 sind exemplarisch in Fig. 1 dargestellt.

Die Antennen 8,9 haben jeweils einen Abstrahlwinkel von 65°, wie in Fig. 2 durch die punktierten Linien angedeutet.

Eine Detektionsfläche 28 einer jeweiligen Antenne 8 ist unter einem Winkel von 30° zu einer horizontalen Planebene, die vorliegend die Ladefläche 4 einschließt, geneigt. Eine Detektionsfläche 30 der Antenne 9 schließt dementsprechend einen Winkel von 60° mit der Ladefläche 4 ein.

Die Antennen 8, 9 sind vorliegend über elektrische Leitungen 32 mit der Steuerungs- und Datenverarbeitungsvorrichtung 10 verbunden. Weiter ist ein GPS-Modul 34 vorgesehen, das mit der Steuerungs- und Datenverarbeitungsvorrichtung 10 gekoppelt ist, wobei die Steuerungs- und Datenverwaltungsvorrichtung 10 dazu eingerichtet ist, eine Erfassung des Stückguts 14 zu starten, sobald das Fahrzeug 2 einen vorgegebenen GPS-Koordinatenbereich verlässt und/oder in einen vorgegebenen GPS-Koordinatenbereich eindringt. Die Sendeeinrichtung 12 hat ein Mobilfunkmodul 36, um Daten an einen Empfänger 18 weiterzugeben.

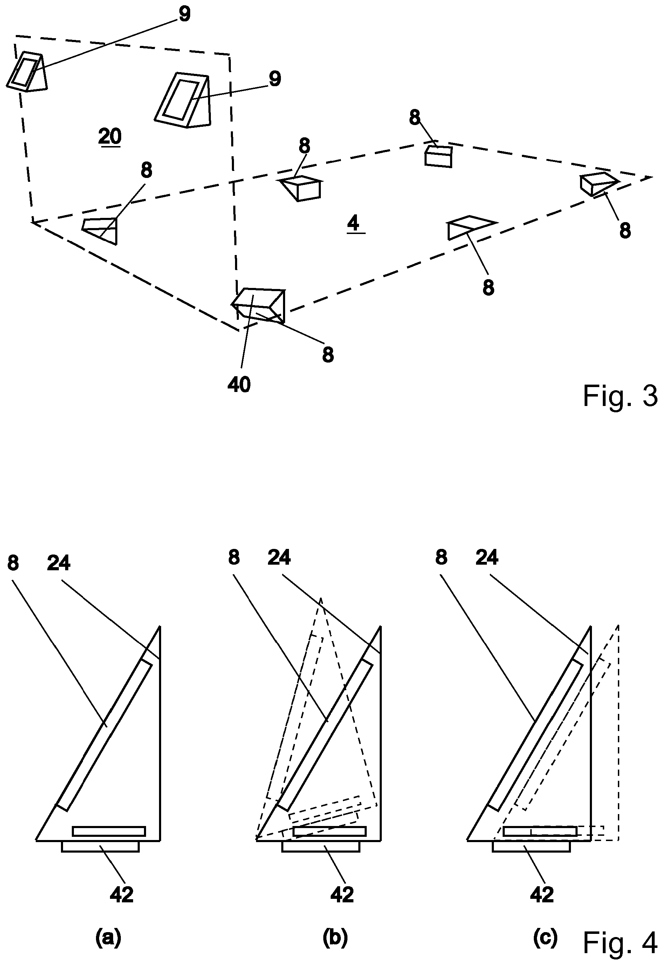

Fig. 3 verdeutlicht schematisch eine Anordnung der Antennen 8, 9 bezüglich der Ladefläche 4 und der Seitenwand 20. Fig. 4 zeigt schematisch eine Ausgestaltung einer Antenne 8 mit einem Gehäuse 24 bzw. einer Halterung 24. Die Halterung 24 weist ein Halteelement 42 auf, entlang dessen eine translatorische Verstellbarkeit (Fig. 4C) sowie eine Verschwenkung (Fig. 4B) ermöglicht wird.

Alternativ zeigt Fig. 5 eine Halterung 24 mit Kugelgelenken 44, die in verschiedenen Orientierungen feststellbar sind, wie exemplarisch in Fig. 5 (a) und Fig. 5 (b) gezeigt.

Fig. 6 zeigt ein System 46 zum Verfolgen von Stückgut 14. Das System hat wenigstens eine Lagerstätte 48 zur Lagerung des Stückguts 14. Innerhalb der Lagerstätte 48 ist Stückgut 14 gelagert, wobei das Stückgut 14 jeweils eine Einrichtung 22 zum Senden und/oder reflektieren von Signalen 16 aufweist, vorliegend individualisierte RFID-Tags 22.

Das System 46 umfasst vorliegend zwei voranstehend beschriebene Fahrzeuge 2, sowie eine Datenbank 50 zur Erfassung von Stückgutdaten. Die Datenbank 50 ist vorliegend in einem Empfänger 18 abgelegt, wobei der Empfänger 18 ein Server 18 ist.

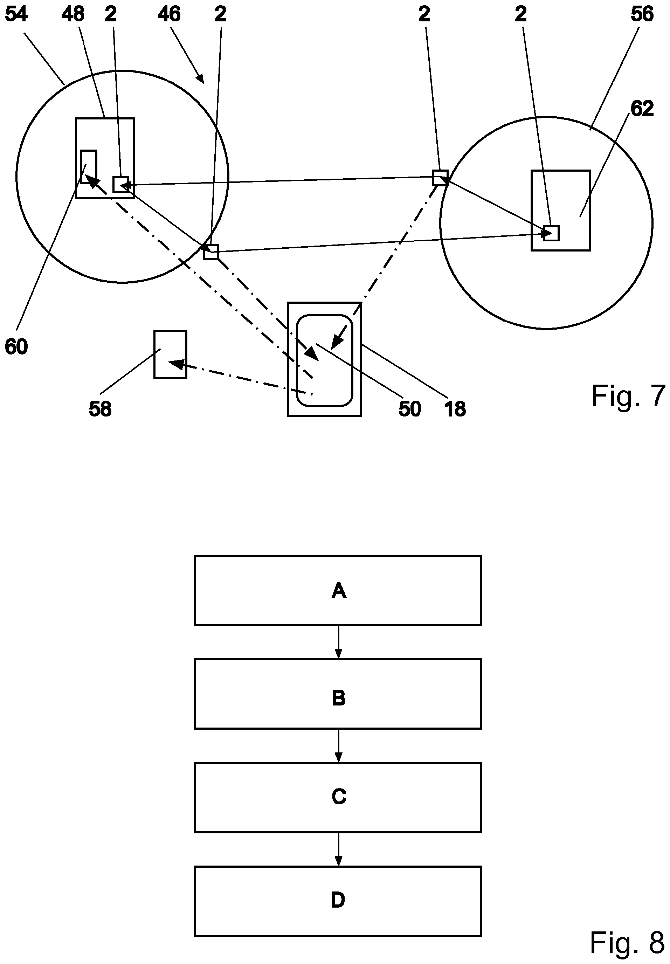

Das System 46 hat weiter eine Benutzerschnittstelle 52 zum Festlegen eines ersten GPS-Koordinatenbereichs 54 und eines zweiten GPS-Koordinatenbereichs 56, wobei sich die Lagerstätte 48 innerhalb des ersten GPS-Koordinatenbereichs 54 befindet (vgl. Fig. 7). Die Datenbank kann mit einem Mobilfunkgerät 58, wie einem Smartphone oder dergleichen, und einem stationären Rechner 50 verbindbar sein, um in der Datenbank hinterlegte Stückgutdaten anzuzeigen.

Nachfolgend wird ein erfindungsgemäßes Verfahren zum Verfolgen von Stückgut anhand der Figuren 7 und 8 näher beschrieben. In einem 1. Verfahrensschritt A erfolgt das Bereitstellen eines erfindungsgemäßen Systems 46. Das Fahrzeug 2 wird innerhalb der Lagerstätte 48 mit Stückgut 14 beladen.

Über die Benutzerschnittstelle 52 wird der 1. GPS-Koordinatenbereich 54 sowie der 2. GPS-Koordinatenbereichs 56 festgelegt (Schritt B).

Sobald das Fahrzeug 2 den ersten GPS-Koordinatenbereich 54 verlässt wird das Erfassen von Stückgutdaten automatisch gestartet und mithilfe der Detektionsvorrichtung 6 durchgeführt (Schritt C). Stückgutdaten werden von dem Fahrzeug 2 an den Server 18 gesendet und in der Datenbank 50 abgelegt (Schritt C) .

Das Fahrzeug bewegt sich weiter in eine Liefer- und/oder Beladezone 62 in der weiteres Stückgut 14 aufgenommen und oder Stückgut 14 abgeladen wird. Nach dem Verlassen des zweiten GPS-Koordinatenbereichs 56 wird ein weiterer Durchlauf der Erfassung von Stückgutdaten mittels der Detektionsvorrichtung 6 gestartet. Wiederum sendet das Fahrzeug 2 Stückgutdaten an den Server 18, wobei die Stückgutdaten in der Datenbank 50 hinterlegt werden (Schritt D). Das Auslösen des Vorgangs der Erfassung von Stückgutdaten wird dabei mithilfe eines GPS-Moduls erreicht, dass die aktuelle Fahrzeugposition anhand von GPS-Daten bestimmt.

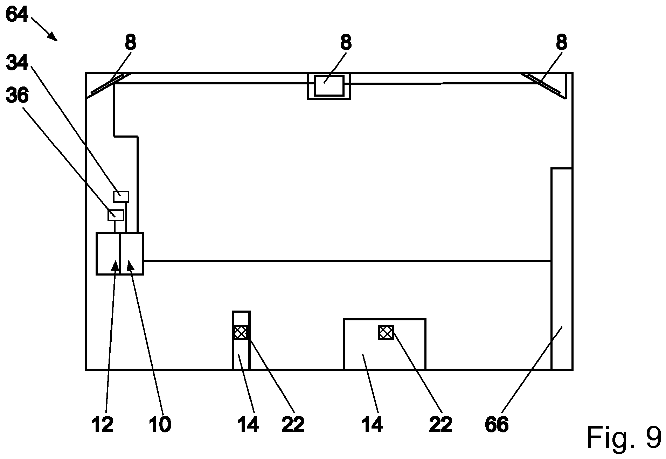

Fig. 9 zeigt einen Frachtcontainer 64, mit einer Detektionsvorrichtung 6. Die Detektionsvorrichtung 6 hat eine Antennen 8, eine Steuerungs- und Datenverarbeitungsvorrichtung 10 und eine Sendevorrichtung 12. Die Detektionsvorrichtung 6 ist zur Erfassung von in dem Container 64 angeordnetem Stückgut 14 eingerichtet. Die Antennen 8 sind zum Empfang eines von dem Stückgut 14 gesendeten und/oder reflektierten Signals eingerichtet. Die Steuerungs- und Datenverarbeitungsvorrichtung 10 ist zur Erzeugung von Stückgutdaten aus einem von den Antennen 8 empfangenen Signals eingerichtet. Die Sendevorrichtung 12 ist zur Übermittlung der Stückgutdaten an einen Empfänger eingerichtet (vgl. Fig. 7). Weiter hat der Container 64 eine automatisierte Zugangskontrolle 66, die alle den Container betretenden und verlassenden Personen erfasst.

### Bezugszeichen

- 2: Fahrzeug
- 4: Ladefläche
- 6: Detektionsvorrichtung
- 8,9: Antenne
- 10: Steuerungs- und Datenverarbeitungsvorrichtung
- 12: Sendevorrichtung
- 14: Stückgut
- 16: Signal
- 18: Empfänger/Server
- 20: Seitenwand
- 22: RFID-Tag
- 24: Halterung
- 26: Dämpfungselement
- 28: Detektionsfläche
- 30: Detektionsfläche
- 32: elektrische Leitung
- 34: GPS-Modul
- 36: Mobilfunkmodul
- 42: Halteelement
- 44: Kugelgelenk
- 46: System
- 48: Lagerstätte
- 50: Datenbank
- 52: Benutzerschnittstelle
- 54: erster GPS-Koordinatenbereich
- 56: zweiter GPS-Koordinatenbereich
- 58: Mobilfunkgerät
- 60: stationärer Rechner
- 62: Liefer- und Beladezone
- 64: Container
- 66: Zutrittskontrolle

## Patentansprüche

1. Fahrzeug,
- mit wenigstens einer Detektionsvorrichtung (6),
- wobei die Detektionsvorrichtung (6) wenigstens eine Antenne (8, 9), eine Steuerungs- und Datenverarbeitungsvorrichtung (10) und eine Schnittstelle (12), wie eine Sendevorrichtung (12) oder dergleichen, aufweist,
- wobei die Detektionsvorrichtung (6) zur Erfassung von auf dem Fahrzeug angeordnetem Stückgut (14) eingerichtet ist,
- wobei die Antenne (8, 9) zum Empfang eines von dem Stückgut (14) gesendeten und/oder reflektierten Signals eingerichtet ist,
- wobei die Steuerungs- und Datenverarbeitungsvorrichtung (10) zur Erzeugung von Stückgutdaten aus einem von der Antenne (8, 9) empfangenen Signal eingerichtet ist, und
- wobei die Schnittstelle (12) zur Übermittlung der Stückgutdaten an einen Empfänger (18) eingerichtet ist.

2. Fahrzeug nach Anspruch 1,
**dadurch gekennzeichnet,**
- **dass** die Detektionseinrichtung zwei oder mehr Antennen (8, 9) aufweist, wobei wenigstens zwei der Antennen (8, 9) entlang einer vertikalen Richtung betrachtet einen Abstand zueinander aufweisen
und/oder
- **dass** eine oder mehrere Antennen (8, 9) einen vertikalen Abstand zu der Ladefläche aufweisen.

3. Fahrzeug nach Anspruch 1 oder Anspruch 2,
**dadurch gekennzeichnet,**
- **dass** wenigstens eine Antenne (8, 9) an die Ladefläche angrenzend angeordnet ist
und/oder
- **dass** wenigstens eine Antenne (8, 9) an einer an die Ladefläche angrenzenden Seitenwand (20) oder Rückwand befestigt ist.

4. Fahrzeug nach einem der Ansprüche 1 bis 3
**dadurch gekennzeichnet,**
- **dass** wenigstens eine Antenne (8, 9) eine RFID-Antenne (8, 9) ist.

5. Fahrzeug nach einem der Ansprüche 1 bis 4,
**dadurch gekennzeichnet,**
- **dass** die Antenne (8, 9) an einer Halterung (24) befestigt ist, die ein Gelenk und/oder eine Führung zum Einstellen der Orientierung und/oder der Position der Antenne (8, 9) hat
und/oder
- **dass** wenigstens eine Antenne (8, 9) in einem staub- und/oder wasserdichten Gehäuse aufgenommen ist
und/oder
- **dass** Dämpfungselemente vorgesehen sind, um die Antenne (8, 9) zumindest teilweise von Fahrzeugvibrationen zu entkoppeln.

6. Fahrzeug nach einem der Ansprüche 1 bis 5,
**dadurch gekennzeichnet,**
- **dass** die Antenne (8, 9) einen Abstrahlwinkel von weniger als 90° aufweist, insbesondere, dass der Abstrahlwinkel kleiner oder gleich 65° ist,
und/oder
- **dass** die Antenne (8, 9) eine Detektionsfläche hat, die unter einem Winkel von 90° oder weniger zu einer horizontalen Planebene geneigt ist.

7. Fahrzeug nach einem der Ansprüche 1 bis 6,
**dadurch gekennzeichnet,**
- **dass** der Antenne (8, 9) und/oder der Steuerungs- und Datenverarbeitungsvorrichtung (10) ein Akku zur Energieversorgung der Antenne (8, 9) zugeordnet ist
und/oder
- **dass** der Antenne (8, 9) eine magnetische Befestigungseinrichtung zum Befestigen der Antenne (8, 9) zugeordnet ist.

8. Fahrzeug nach einem Ansprüche 1 bis 7,
**dadurch gekennzeichnet,**
- **dass** ein GPS-Modul vorgesehen ist, das mit der Steuerungs- und Datenverarbeitungseinrichtung gekoppelt ist,
- wobei die Steuerungs- und Datenverarbeitungseinrichtung dazu eingerichtet ist, eine Erfassung des Stückguts (14) zu starten, sobald das Fahrzeug einen vorgegebenen GPS-Koordinatenbereich (54, 56) verlässt und/oder in einen vorgegebenen GPS-Koordinatenbereich (54, 56) eindringt.

9. Container, insbesondere Frachtcontainer,
- mit wenigstens einer Detektionsvorrichtung (6),
- wobei die Detektionsvorrichtung (6) wenigstens eine Antenne (8, 9), eine Steuerungs- und Datenverarbeitungsvorrichtung (10) und eine Schnittstelle (12), wie eine Sendevorrichtung (12) oder dergleichen, aufweist,
- wobei die Detektionsvorrichtung (6) zur Erfassung von in dem Container angeordnetem Stückgut (14) eingerichtet ist,
- wobei die Antenne (8, 9) zum Empfang eines von dem Stückgut (14) gesendeten und/oder reflektierten Signals eingerichtet ist,
- wobei die Steuerungs- und Datenverarbeitungsvorrichtung (10) zur Erzeugung von Stückgutdaten aus einem von der Antenne (8, 9) empfangenen Signal eingerichtet ist, und
- wobei die Schnittstelle (12) zur Übermittlung der Stückgutdaten an einen Empfänger (18) eingerichtet ist.

10. System zum Verfolgen von Stückgut,
- mit wenigstens einer Lagerstätte (48) zur Lagerung des Stückguts (14),
- mit gelagertem Stückgut (14), wobei das Stückgut (14) jeweils eine Einrichtung (22) zum Senden und/oder Reflektieren von Signalen aufweist,
- mit wenigstens einem Fahrzeug (2) nach einem der voranstehenden Ansprüche 1 bis 8 und/oder einem Container nach Anspruch 9 und
- mit einer Datenbank (50) zur Erfassung von Stückgutdaten.

11. System nach Anspruch 10,
**gekennzeichnet durch**
- eine Benutzerschnittstelle (52) zum Festlegen eines ersten GPS-Koordinatenbereichs und eines zweiten GPS-Koordinatenbereichs,
- wobei sich die Lagerstätte (48) innerhalb des ersten GPS-Koordinatenbereichs befindet und eine Liefer- und/oder weitere Beladezone innerhalb des zweiten GPS-Koordinatenbereichs angeordnet ist,
- wobei das Fahrzeug dazu eingerichtet ist, eine Stückguterfassung nach dem Verlassen und/oder Erreichen des ersten und/oder des zweiten Koordinatenbereichs zu starten.

12. System nach Anspruch 10 oder Anspruch 11
**dadurch gekennzeichnet,**
- **dass** das Stückgut (14) jeweils ein RFID-TAG (22) aufweist und/oder
- **dass** das Stückgut (14) Betriebsmittel zum Einrichten von Straßenbaustellen aufweist.

13. System nach einem der Ansprüche 10 bis 12
**gekennzeichnet durch**
- einen tragbaren Messkoffer,
- wobei in dem Messkoffer die Antenne (8, 9), die Steuerungs- und Datenverarbeitungsvorrichtung (10) und die Sendevorrichtung (12) aufgenommen ist.

14. Verfahren zum Verfolgen von Stückgut, mit den Verfahrensschritten:
- Bereitstellen eines Systems (46) nach einem der Ansprüche 9 bis 12;
- Beladen des Fahrzeugs und/oder Containers mit Stückgut (14);
- Erfassen von Stückgutdaten mit der Detektionsvorrichtung (6), wobei die Antenne (8, 9) ein von dem Stückgut (14) gesendetes und/oder reflektiertes Signal empfängt, wobei die Steuerungs- und Datenverarbeitungsvorrichtung (10) aus dem von der Antenne (8, 9) empfangenen Signal Stückgutdaten erzeugt;
- Übermittlung der Stückgutdaten an einen Empfänger (18).

15. Verfahren nach Anspruch 14,
**dadurch gekennzeichnet**,
- wobei das Erfassen von Stückgutdaten nach dem Verlassen oder Erreichen eines ersten und/oder eines zweiten GPS-Koordinatenbereichs automatisiert ausgelöst wird
- wobei vor dem Erfassen von Stückgutdaten ein Festlegen eines ersten GPS-Koordinatenbereichs (54) und eines zweiten GPS-Koordinatenbereichs (56) mittels einer Benutzerschnittstelle (52) erfolgt,
- wobei sich eine Lagerstätte (48) innerhalb des ersten GPS-Koordinatenbereichs (54) befindet und eine Liefer- und/oder weitere Beladezone (62) innerhalb des zweiten GPS-Koordinatenbereich (56) angeordnet ist,
- und wobei eine aktuelle Fahrzeug- und/oder Containerposition mittels eines GPS-Moduls (34) überwacht wird.
